# EUROPEAN PATENT APPLICATION

(11) **EP 1 801 085 A1**
(43) Date of publication of application: **27.06.2007**
(21) Application number: 05292780.3
(22) Date of filing: 23.12.2005
(51) Int. Cl.: C04B 28/16, C04B 40/06

(54) **Skin-free floor screed and method for obtaining same**

(71) Applicant: LAFARGE PLATRES, 84915 Avignon Cedex 9 (FR)
(72) Inventor: Nijman, Gert, 7323 Mc Apeldoorn (NL); Lukassen, Joop, 7011 AJ Gaanderen (NL)
(74) Representative: Hirsch & Associés

(57) **Abstract**

The invention relates to a binder composition based on calcium sulfate and comprising aluminum sulfate wherein more than 5 wt% of the calcium sulfate is under anhydrous form.

## Description

### TECHNICAL FIELD

The present invention relates to skin-free / laitance-free floor screed and to a method for obtaining same. The invention also relates to various compositions useful for implementing said method.

### TECHNICAL BACKGROUND

Mortar compositions based on calcium sulfate as a binder are widely used for making floor screeds (floor underlayments). A common problem encountered in this field is the formation of a thin glassy or powdered layer (depending on the materials and conditions of application) at the surface of the floor screed upon setting of the fresh mortar composition, which is sometimes referred to as a "skin" or a "laitance". This skin is a layer, a few hundredths of millimeters thick, which is formed within the first few hours after pouring the mortar.

This skin is partly made of calcium carbonate originating from the carbonation of the lime which is present in some of the calcium sulfate used as a raw material or as an additive. The lime dissolves into the gauging water and is transported with it to the top of the screed during the phase of setting of the mortar. It then comes into contact with the CO₂-containing air and thus carbonates to form CaCO₃.

The skin tends to weaken the adhesive properties of the floor screed surface and to compromise the subsequent application of flooring materials onto the floor screed and the durability of the resulting floor. As a consequence, extensive brushing and / or sanding of the dusty / glassy surface of such a floor screed prior to application of flooring materials is / are generally necessary in order to achieve sufficient adhesive capacity. Not only is this additional brushing and / or sanding step impractical, time-consuming and costly in terms of equipment investment, but it also appears not to be fully satisfactory because making sure that the skin has been correctly disposed of is an unduly difficult task in the context of routine building work.

Indeed, there are three main methods to assess the absence or the presence of skin:
- The first method is the visual inspection which requires expertise and experience in this field.
- The second family of possible tests requires specific tools (such as a knife or scrapping equipment) in order to scrap the skin and to measure its adhesion to the screed. Although these tools (for example Ri-ri) are sometimes supplied with a detailed modus operandi, they are not normalized.
- The third method is the pull-off-strength measurement using a dynamometer. This method is normalized (EN 1348) and the rules of the art recommend to achieve a pull-off-strength measurement of minimum 1.0 N/mm² on dry screed or 0.5 N/mm² on wet screed.

Several chemical methods aiming at solving the problems associated with the presence of a skin on top of floor screeds have also been described in the prior art.

For instance, FR 2865472 discloses an aqueous composition containing latex composed of an aqueous emulsion of a polymer. This aqueous composition is sprayed onto a mortar composition after casting and before setting, so as to increase the subsequent adhesive capacity of the mortar composition.

US 2005/0150427 discloses another mixture for use as a coating between a floor underlayment and an adhesive, said mixture comprising a latex polymer and a surface enhancing agent.

However, the above-mentioned prior art methods necessitate the additional time-consuming step of spraying a protective coating composition onto the floor screed and thus represents a major drawback. In other terms there is still a need for new mortar compositions based on anhydrous calcium sulfate as a binder which would intrinsically not lead to the formation of a surface powdered layer or glassy skin and which would have better adhesive properties after setting and drying.

### SUMMARY OF THE INVENTION

The invention relates to a binder composition based on calcium sulfate and comprising aluminum sulfate wherein more than 5 wt% of the calcium sulfate is under anhydrous form.

The above-mentioned binder composition advantageously comprises between 0.3 and 3.0 wt%, preferably between 0.4 and 0.95 wt% aluminum sulfate.

According to a particular embodiment, more than 30 wt%, preferably more than 50 wt%, and most preferably more than 80 wt% of the calcium sulfate is under anhydrous form.

The above-mentioned binder composition advantageously comprises one or more additives chosen among retarders, starters, plasticizers, fibers, tracers, stabilizers and thickeners.

The above-mentioned binder composition advantageously comprises alpha hemi-hydrate, potassium sulfate, at least one organic retarder and at least one plasticizer.

The above-mentioned binder composition advantageously comprises alpha hemi-hydrate, potassium sulfate, a melamine-based plasticizer, an acrylic copolymer based plasticizer and polyoxymethylene amino acid.

The invention also relates to a dry mortar composition comprising:
- a calcium sulfate binder ;
- aluminum sulfate ; and
- aggregates and / or fillers.

This dry mortar composition advantageously comprises :
- the above-mentioned binder composition; and
- aggregates and / or fillers.

The invention also relates to a wet mortar composition comprising:
- the above-mentioned binder composition or the above-mentioned dry mortar composition, mixed with
- water.

According to an advantageous embodiment of said wet mortar composition, the water/binder ratio is between 0.3 and 1.0 and preferably between 0.45 and 0.55.

According to an advantageous embodiment, the above-mentioned wet mortar composition is a flowing mixture as defined in the EN 13454-1 standard.

The invention also relates to a floor screed obtained by the hardening (setting) of the above-mentioned wet mortar composition.

The invention also relates to the use of aluminum sulfate for preparing a floor screed substantially devoid of surface skin upon setting.

According to a particular embodiment of said use, aluminum sulfate is used in combination with one or more additives chosen among retarders, starters, plasticizers, fibers, tracers, stabilizers and thickeners.

The invention also relates to a method for preparing a wet mortar composition comprising the step of:
- mixing the above-defined binder composition together with aggregates and / or fillers and water.

The invention also relates to a method for preparing a wet mortar composition comprising the step of :
- mixing the above-defined dry mortar composition with water.

The invention also relates to a method for preparing a wet mortar composition, comprising the step of :
- mixing a calcium sulfate binder together with aggregates and / or fillers, water, aluminum sulfate and optionally one or more additives chosen among retarders, starters, plasticizers, fibers, tracers, stabilizers and thickeners.

The invention also relates to a method for preparing a wet mortar composition, comprising the step of :
- mixing a calcium sulfate binder together with aggregates and / or fillers and water,
wherein aluminum sulfate and optionally one or more additives chosen among retarders, starters, plasticizers, fibers, tracers, stabilizers and thickeners are added before, during or after said step.

The invention also relates to a method for preparing a floor screed comprising the step of:
- pouring the above-defined wet mortar composition onto a floor.

The present invention enables to overcome the above-mentioned drawbacks of the prior art, and in particular to obtain a floor screed based on a calcium sulfate binder which is substantially or even totally devoid of skin or powdery layer at its surface, without any additional or specific step of chemical or mechanical surface treatment after pouring / casting.

By "substantially devoid of skin" is meant for example:
- that less than 10 wt% of skin is present at the surface of the floor screed as assessed by visual inspection (when compared to a standard floor screed with skin); or
- that a pull-off strength measurement performed on the dry screed yields a result of at least 1.0 N/mm² according to the EN 1348 standard; or
- that a pull-off strength measurement performed on the wet screed yields a result of at least 0.5 N/mm² according to the EN 1348 standard.

Floor screeds produced according to the invention have good adhesive properties with respect to the subsequent application of flooring materials such as vinyl, linoleum, tiles, carpet, wooden parquet and any other floor covering. The present method for producing floor screeds is faster, more convenient and more economical than commonly used methods.

It should also be underlined that the mortar provided by the present invention exhibits performances in terms of rheology, water demand, setting time, shrinkage and swelling, strength development etc. that are very satisfactory with respect to the use of said mortar for making floor screeds, and that are at least equivalent to the performances of prior art mortar.

The various advantages provided by the invention are obtained through the use of a calcium sulfate binder in combination with aluminum sulfate and preferably in further combination with other additives.

### DETAILED DESCRIPTION OF THE PREFERRED EMBODIMENTS

### Floor screed based on calcium sulfate

In the context of the present invention, by "binder compositions based on calcium sulfate" is meant compositions in which calcium sulfate exhibiting hydraulic properties represents between 50 and 85 wt% (in the case of a "calcium composite binder"), or preferably more than 85 wt%, of the total hydraulic binder (in the case of a "calcium-based binder"). Said calcium sulfate may be hemi-hydrated (alpha or beta type coming from natural or synthetic sources of gypsum) or anhydrous, for example type II or III anhydrite, obtained from synthetic sources (fluoroanhydrite for example) or natural quarries or by calcination of natural / synthetic gypsum (produced via flue gas desulphurization for example). The latter may be produced through a standard calcination process or through the Rocal^{™} process. Mixtures of several forms of CaSO₄ may also be used.

The floor screed materials according to the invention generally comply with the requirements of European Standards EN 13813 and 13454-1 relating to calcium sulfate mortars and binders for floor screeds.

The binder compositions according to the invention comprise aluminum sulfate. It should be understood that said aluminum sulfate can be used under its various known forms. A preferred form is the Al₂(SO₄)₃ salt.

Although calcium sulfate can be used under the various forms described above, anhydrite is the preferred form, in particular thermal anhydrite or synthetic anhydrite or a mixture of both. According to a preferred embodiment, almost all of the calcium sulfate is thermal and / or synthetic anhydrite (most preferably thermal anhydrite) and only a small fraction of at most a few percent is made of alpha hemi-hydrate.

There are two main reasons why the invention more particularly (although not exclusively) relates to compositions based on thermal or synthetic anhydrite:
1) As thermal anhydrite and synthetic anhydrite are inevitable by-products of industrial processes, their use is advantageous on an economic and ecological point of view.
2) Because of the presence of a certain amount of lime in thermal and synthetic anhydrite (which is generally added during the manufacturing process of said anhydrites), carbonation and therefore the formation of a skin on top of the setting mortar are particularly problematic with these forms of calcium sulfate.

In the context of the present invention, a "dry mortar composition" comprises a binder composition as defined above together with aggregates and / or fillers. For example sand may be used as a particular type of aggregates. The aggregates and / or fillers referred to herein preferably have an average diameter comprised between 0 and 8 mm. A preferred binder to aggregatesfillers ratio is from 1:1 to 1:3.

The addition of water to said dry mortar composition (preferably with a water-to-binder ratio between 0.3 and 1.0 or most advantageously between 0.45 and 0.55) yields a wet mortar composition. This wet mortar composition is preferably a self-leveling mortar, also known as a "flowing mixture" according to the EN 13454-1 standard.

The invention also relates to a wet mortar composition based on calcium sulfate, wherein more than 30 wt%, preferably more than 50 wt%, most preferably more than 80 wt% of the calcium sulfate is under anhydrous form and the wet mortar composition is substantially devoid of surface skin upon setting. Preferably, said calcium sulfate under anhydrous form is thermal anhydrite or synthetic anhydrite or a mixture of both. According to a particular embodiment said wet mortar composition comprises lime, preferably approximately 1 %.

### Additives

The binder composition or mortar according to the invention may contain classical additives, such as dispersers / plasticizers, accelerators / starters, retarders, viscosity agents / thickeners, tracers, water repellant / hydrophobizing agents under mineral or organic form.

One or more dispersers / plasticizers may in particular be used according to the invention. The addition of a plasticizer / disperser to aqueous compositions of calcium sulfate usually aims inter alia at allowing a reduction in the water content and maintaining the fluidity / rheology of said compositions.

For instance dispersers may be obtained from the condensation of formaldehyde and sulfonated naphthalene or from the condensation of formaldehyde and sulfonated melamines. Acrylic copolymer dispersers may also be used, preferably composed of polymers comprising a polycarboxylic, optionally salted chain, to which other groups (for instance of the polycarboxylate or polyoxyethylene types) are attached.

One or more starters / accelerators of setting may also be used according to the invention in order inter alia to obtain a setting time (period between the start of setting and the end of setting) which is compatible with the desired application.

For instance starters may be potassium sulfate, sodium sulfate, lithium sulfate, lime under various forms like quick lime or hydrated lime or alpha hemi-hydrate.

One or more retarders of setting may also be used according to the invention in order to obtain a setting time (period between the start of setting and the end of setting) which is compatible with the desired application.

For instance retarders may be chosen among carboxylic acids like citric acid, sugars and their derivatives, calcium polyoxymethylene amine acid.

Viscosity agents / thickeners may also be used according to the invention in order to prevent the risk of segregation and bleeding.

For instance viscosity agents may be chosen among various biopolymers produced via fermentation (such as gums), precipitated silica or derivatives from cellulose.

### Preferred compositions

A preferred binder composition contains the following ingredients with the following concentration ranges:
- Thermal anhydrite or synthetic anhydrite or a mixture of both: 90 to 99 wt%
- Aluminum sulfate: 0.3 to 3 wt%;
- Alpha hemi-hydrate: 0.2 to 5 wt%;
- Potassium sulfate: 0.1 to 2 wt%;
- Melamine-based plasticizer: 0.1 to 1 wt%;
- Acrylic copolymer: 0.001 to 0.2 wt%;
- Polyoxymethylene amino acid: 0.002 to 0.1 wt%.

It should be understood that all these ingredients may be premixed prior to mixing with water and aggregates/fillers, but that every individual ingredient may also be incorporated at a different stage, any time before, during or after mixing with water.

Departing from the above binder composition, it can be advantageous to replace polyoxymethylene amino acid with another retarder or with a combination of retarders and it can also be possible to replace the melamine-based plasticizer with an acrylic copolymer.

### EXAMPLE

The following example illustrates the invention without limiting it.

The following ingredients are mixed in order to obtain a binder composition:
- Thermal anhydrite from Rocal Boxberg plant: 97.47 wt%
- Aluminium sulfate from Akzo Nobel: 0.70 wt%
- Potassium sulfate from Kali und Saltz: 0.50 wt%
- Melamine based plasticizer Melment F10 from Degussa: 0.30 wt%
- Acrylic polymer plasticizer Dynamon SP1 powder from Mapei: 0.022 wt%
- Alpha hemi-hydrate: 1.00 wt%
- Retardan P™ (Polyoxymethylene amino acid) from Tricosal: 0.011 wt%

Two mortar recipes are prepared: a standard recipe (prepared with Gyvlon binder CAB 30 bought in 2004 from Gyvlon GmbH, Boxberg plant), and a modified recipe according to the above binder composition. Both mortar recipes are prepared with a water-to-binder ratio of 0.48.

The two mortar recipes are poured in plastic /polystyrene molds of about 30x30 cm. The molds are kept under standard conditions in laboratory for 28 days, then the operator follows the modus operandi described in the technical recommendation CUR 62. Five metallic pellets are glued to the surface of the screed using an epoxy glue. The screed prepared with the standard recipe is divided into two samples: one on the surface of which sanding with a coarse sanding paper and de-dusting are performed prior to gluing the pellets, and one which is not subjected to any sanding prior to gluing. The screed prepared with the modified recipe is not sanded prior to gluing.

After 24 hours the pull-off strength is measured on each of the pellets using a dynamometer. The results are presented in Table 1 below, where each number corresponds to the average of 5 individual measurements.

**Table 1**

| | Result in N/mm² |
|---|---|
| Standard recipe, unsanded | 0.3 |
| Standard recipe, sanded | 1.7 |
| Modified recipe, unsanded | 1.8 |

These results demonstrate that the surface of the samples prepared with the standard recipe must be sanded in order to obtain satisfactory adhesive properties, whereas with the modified recipe (recipe according to the invention) the surface is devoid of skin upon setting so that sanding is not necessary for obtaining satisfactory adhesive properties.

## Claims

1. A binder composition based on calcium sulfate and comprising aluminum sulfate wherein more than 5 wt% of the calcium sulfate is under anhydrous form.

2. The binder composition of claim 1 comprising between 0.3 and 3.0 wt%, preferably between 0.4 and 0.95 wt% aluminum sulfate.

3. The binder composition of claim 1 or 2 wherein more than 30 wt%, preferably more than 50 wt%, and most preferably more than 80 wt% of the calcium sulfate is under anhydrous form.

4. The binder composition of one of claims 1 to 3 comprising one or more additives chosen among retarders, starters, plasticizers, fibers, tracers, stabilizers and thickeners.

5. The binder composition of claim 4 comprising alpha hemi-hydrate, potassium sulfate, at least one organic retarder and at least one plasticizer.

6. The binder composition of claim 4 comprising alpha hemi-hydrate, potassium sulfate, a melamine-based plasticizer, an acrylic copolymer based plasticizer and polyoxymethylene amino acid.

7. A dry mortar composition comprising:
- a calcium sulfate binder ;
- aluminum sulfate ; and
- aggregates and / or fillers.

8. The dry mortar composition of claim 7, which comprises :
- the binder composition of one of claims 1 to 6 ; and
- aggregates and / or fillers.

9. A wet mortar composition comprising :
- the binder composition of one of claims 1 to 6 or the dry mortar composition of claim 7 or 8, mixed with
- water.

10. The wet mortar composition of claim 9 wherein the water/binder ratio is between 0.3 and 1.0 and preferably between 0.45 and 0.55.

11. The wet mortar composition of claim 9 or 10 which is a flowing mixture as defined in the EN 13454-1 standard.

12. A floor screed obtained by the hardening of the wet mortar composition of one of claims 9 to 11.

13. The use of aluminum sulfate for preparing a floor screed substantially devoid of surface skin upon setting.

14. The use according to claim 13 wherein aluminum sulfate is used in combination with one or more additives chosen among retarders, starters, plasticizers, fibers, tracers, stabilizers and thickeners.

15. A method for preparing a wet mortar composition comprising the step of :
- mixing the binder composition of one of claims 1 to 6 together with aggregates and /or fillers and water.

16. A method for preparing a wet mortar composition comprising the step of :
- mixing the dry mortar composition of claim 7 or 8 with water.

17. A method for preparing a wet mortar composition, comprising the step of :
- mixing a calcium sulfate binder together with aggregates and / or fillers, water, aluminum sulfate and optionally one or more additives chosen among retarders, starters, plasticizers, fibers, tracers, stabilizers and thickeners.

18. A method for preparing a wet mortar composition, comprising the step of :
- mixing a calcium sulfate binder together with aggregates and / or fillers and water,
wherein aluminum sulfate and optionally one or more additives chosen among retarders, starters, plasticizers, fibers, tracers, stabilizers and thickeners are added before, during or after said step.

19. A method for preparing a floor screed comprising the step of :
- pouring the wet mortar composition of one of claims 9 to 11 or obtainable by the process of one of claims 15 to 18 onto a floor.
